(19) **Europäisches Patentamt / European Patent Office / Office européen des brevets**

(11) **EP 2 414 087 B1**

(12) **EUROPEAN PATENT SPECIFICATION**

(45) Date of publication and mention
of the grant of the patent:
**16.01.2019 Bulletin 2019/03**

(51) Int Cl.:
***B01D 71/26*** (2006.01)

(21) Application number: **10708474.1**

(86) International application number:
**PCT/US2010/026426**

(22) Date of filing: **05.03.2010**

(87) International publication number:
**WO 2010/114675 (07.10.2010 Gazette 2010/40)**

(54) **MICROPOROUS MEMBRANES, METHOD FOR MAKING SUCH MEMBRANES, AND THE USE OF SUCH MEMBRANES AS BATTERY SEPARATOR FILM**

MIKROPORÖSE MEMBRANEN, VERFAHREN ZU IHRER HERSTELLUNG SOWIE DEREN VERWENDUNG ALS TRENNFILM IN BATTERIEN

MEMBRANES MICROPOREUSES, PROCÉDÉ DE FABRICATION ET UTILISATION DE CES MEMBRANES EN TANT QUE FILM SÉPARATEUR DE BATTERIES

(84) Designated Contracting States:
**AT BE BG CH CY CZ DE DK EE ES FI FR GB GR HR HU IE IS IT LI LT LU LV MC MK MT NL NO PL PT RO SE SI SK SM TR**

(30) Priority: 30.03.2009 US 164827 P
30.03.2009 US 164833 P
30.03.2009 US 164817 P
30.03.2009 US 164824 P
19.08.2009 EP 09168194
25.06.2009 EP 09163698
25.05.2009 EP 09160965
11.05.2009 US 177060 P
24.06.2009 US 220094 P
25.05.2009 EP 09160967
25.05.2009 EP 09160966
25.05.2009 EP 09160964

(43) Date of publication of application:
**08.02.2012 Bulletin 2012/06**

(73) Proprietor: **Toray Industries, Inc.**
**Chuo-ku**
**Tokyo (JP)**

(72) Inventors:
• **ISHIHARA, Takeshi**
**Nasushiobara-shi**
**Tochigi-ken 329 - 2763 (JP)**
• **CROWTHER, Donna, J.**
**Seabrook**
**TX 77586 (US)**
• **BRANT, Patrick**
**Seabrook**
**TX 77586 (US)**
• **MIYAOKI, Satoshi**
**Nasushiobara-shi**
**Tochigi-ken 329 - 2763 (JP)**
• **KONO, Koichi**
**Nasushiobara-shi**
**Tochigi-ken 329 - 2763 (JP)**

(74) Representative: **Webster, Jeremy Mark et al**
**Mewburn Ellis LLP**
**City Tower**
**40 Basinghall Street**
**London EC2V 5DE (GB)**

(56) References cited:
**EP-A1- 1 947 138      WO-A1-2008/026782**
**JP-A- 2002 128 942**

EP 2 414 087 B1

**Description**

## FIELD OF THE INVENTION

The invention relates to microporous membranes comprising polyolefin and having a good balance of air permeability, shutdown temperature and shutdown speed. The invention also relates to methods for making such membranes, and the use of such membranes as battery separator film in, e.g., lithium ion secondary batteries.

## BACKGROUND OF THE INVENTION

Microporous membranes can be used as battery separators in, e.g., primary and secondary lithium batteries, lithium polymer batteries, nickel-hydrogen batteries, nickel-cadmium batteries, nickel-zinc batteries, silver-zinc secondary batteries, etc. When microporous membranes are used for battery separators, particularly lithium ion battery separators, the membranes' characteristics significantly affect the properties, productivity and performance of the batteries. Accordingly, the microporous membrane should have appropriate permeability, mechanical properties, heat resistance, dimensional stability, shut down properties, melt down properties, etc. It is desirable for such batteries to have a relatively low shutdown temperature, rapid shutdown speed and a relatively high meltdown temperature for improved battery safety properties, particularly for batteries exposed to high temperatures under operating conditions.

PCT Patent Application No. WO 2008/026782 discloses a multi-layer microporous polyolefin membrane comprising a first porous layer of a polyethylene, and a second porous layer comprising a polyethylene and polypropylene, wherein the polypropylene has a weight-average molecular weight of $6 \times 10^5$ or more and a fraction of polypropylene molecules having a molecular weight of $1.8 \times 10^6$ or more is 10% or more by mass.

European Patent Application No. EP 1947138 discloses a microporous membrane comprising polyethylene as a main component, the membrane having (a) a shutdown temperature of 135°C or lower, at which the air permeability measured while heating at a temperature-elevating speed of 5°C/minute reaches $1 \times 10^5$ sec/100 cm$^3$, (b) an air permeability change ratio of $1 \times 10^4$ sec/100 cm$^3$/°C or more (which is a gradient of a curve representing the dependency of the air permeability on a temperature at $1 \times 10^4$ sec/100 cm$^3$), and (c) a meltdown temperature of 150°C or higher, at which the air permeability measured while further heating after reaching the above shutdown temperature becomes $1 \times 10^5$ sec/100 cm$^3$ again.

Microporous membranes having a relatively low shutdown temperature have been produced using polyethylene having a low molecular weight and/or low melting temperature. While the membrane's shutdown properties are improved, the use of such polyethylenes can lead to decreased air permeability and increased heat shrinkage.

For example, Japanese Patent Application Laid Open No. JP2002-128943 and JP2002-128942 disclose microporous membranes having shutdown temperatures of 130°C and heat shrinkage values $\geq$ 8.0%. Other references disclose the microporous membrane having relatively rapid shutdown speed. For example, WO96-027633 and Japanese Patent Application Laid Open No. JP11-269289 discloses a method for using the relationship between temperature and impedance (or permeability) to evaluate the membrane's shutdown speed.

While improvements have been made, microporous membranes having relatively low shutdown temperature and relatively rapid shutdown speed are desired.

## SUMMARY OF INVENTION

In an embodiment, the invention relates to a microporous membrane according to any one of claims 1 to 5, the membrane having a shutdown temperature $\leq$ 130.5°C and a shutdown activation energy E2 (as defined below) $\geq$ 3.50 $\times 10^3$ J/mol.

The membrane incorporates 1.0 wt.% to 20.0 wt.% of an ethylene-alpha-olefin copolymer having a melting peak ("Tm") $\leq$ 130.0°C, a weight average molecular weight ("Mw") $\leq 9.0 \times 10^5$ (e.g., Mw $\leq 5.0 \times 10^5$), a molecular weight distribution (MWD defined as Mw/Mn) $\leq$ 10.0, and a comonomer content in the range of from about 1.0 to 5.0 mol.%.

In another embodiment, this invention relates to a method according to any one of claims 7 to 10 for producing a microporous membrane.

In yet another embodiment, the invention relates to a battery comprising an anode, a cathode, an electrolyte, and at least one battery separator located between the anode and the cathode, the battery separator comprising the microporous membrane of any of claims 1 to 5.

The battery can be, e.g., a lithium ion primary or secondary battery. The battery can be used as a power source for, e.g., a power tool such as a battery-operated saw or drill, an electric vehicle, or a hybrid electric vehicle, etc.

## BRIEF DESCRIPTION OF THE FIGURES

Figure 1 is a plot of air permeability as a function of temperature for a microporous membrane comprising polyethylene, the membrane having a shutdown temperature of 130.67°C and a meltdown temperature of 148.89°C.

Figure 2A is a plot of the natural logarithm of the change in air permeability (Gurley Value) as a function of reciprocal temperature (in inverse Kelvin) for two microporous membranes comprising polyolefin copolymer (solid rectangle points and solid diamond points).

Figure 2B is an enlargement of Figure 2A containing a fit of the first seven data points for each membrane. The data

$$Ln \Delta G = Ao \frac{E2 \bullet A}{R} (T^{-1})$$

points are fitted to the equation to obtain the values for E2.

Figure 3 shows that the value of E2 is approximately constant for microporous membranes having a polyolefin copolymer content in the range of 5 wt.% to 20 wt.%.

## DETAILED DESCRIPTION OF THE INVENTION

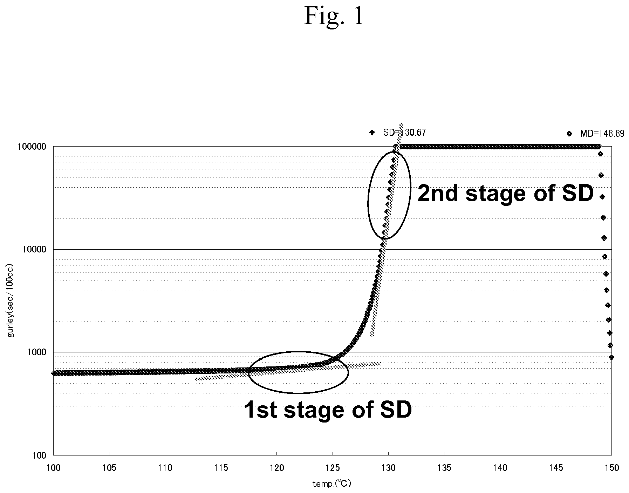

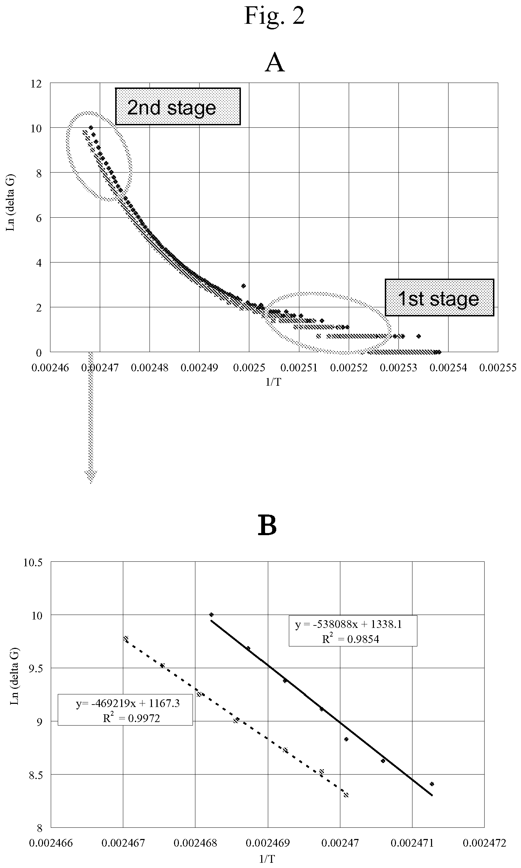

The invention is based on the discovery that when a microporous membrane comprises polyolefin copolymer having a Tm, an Mw, and a comonomer content in desired ranges, the shutdown characteristics of the membrane (shutdown temperature and shutdown speed) is improved. The membrane's shutdown speed is modeled as a reaction where at least a portion of the polyolefin in the microporous membrane migrates into the membrane's pores, thereby reducing membrane permeability. The shutdown reaction can be described thermodynamically in terms of the Arrhenius equation $k = Ae^{E2/RT}$ where the rate constant k is the change in membrane permeability, E2 is the shutdown activation energy, R is the gas constant, T is absolute temperature, and A is a pre-exponential factor. *See* Figures 1 and 2.

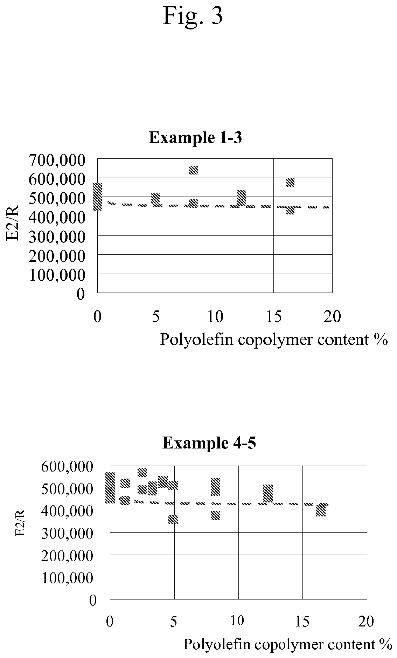

It has been discovered that membrane's shutdown characteristics are improved when the membrane comprises polyolefin copolymer having a Tm ≤ 130.0°C, an Mw ≤ 9 x 10⁵, an MWD ≤ 10, and a comonomer content in the range of from about 1.0 to 5.0 mol.%. Figure 3 shows that for amounts of such a polyolefin copolymer greater than a minimum value of about 3 wt.% based on the weight of the membrane, the value of E2 depends on the selected polyolefin copolymer species and is relatively independent of the amount used (as is expected for reactions satisfying an Arrhenius-type relationship). Moreover, Figures 2 and 3 show that the relationship between the amount of selected polyolefin copolymer and value of the E2/RT slope is specific to the selected polyolefin copolymer and is relatively independent of the amount present in the membrane.

While not wishing to be bound by any theory or model, it is believed that the increase in membrane shutdown speed results at least in part from copolymer swelling that occurs as the copolymer becomes molten. For copolymer having a Tm ≤ 130.0°C, the largest change in copolymer density (greatest amount of swelling) is observed when the comonomer content is ≤ 5.0 mol.%.

### [1] Composition and Structure of the microporous membrane

The invention relates to microporous membranes, especially monolayer membranes, having a low shutdown temperature, improved shutdown speed, and good air permeability; and an improved balance of these properties. The invention also

relates to a method for producing such membranes. In the production method, an initial method step involves combining polyethylene resins, with a diluent, and then extruding the polymer and diluent to make an extrudate. The process conditions in this initial step can be the same as those described in PCT Publications WO 2007/132942 and WO 2008/016174, for example.

In an embodiment, the microporous membrane comprises the polymer used to produce the extrudate, wherein the polymer resin can comprise, e.g., (a) a first polyethylene being an an ethylene-alpha olefin copolymer having an Mw ≤ 9.0 x 10⁵, an MWD ≤ 10, a Tm ≤ 130.0°C, and comonomer content in the range from 1.0 wt.% to 3.0 mol.%, (b) a second polyethylene having a Tm ≥ 130°C and an Mw ≤ 1 x 10⁶ and (c) a third polyethylene having an Mw > 1.0 x 10⁶. In an embodiment, the microporous membrane is a monolayer membrane, i.e., it is not laminated or coextruded with additional layers. The membrane produced from the extrudate can consist essentially of or even consist of a single layer comprising polyethylene.

The microporous membrane comprises (a) from 1.0 wt.% to 20.0 wt.%, e.g., from about 4.0 wt.% to about 17.0 wt.%, such as from about 8.0 wt.% to about 13.0 wt.%, of the first polyethylene (i.e., ethylene-alpha olefin copolymer) ; (b) from 25.0 wt.% to 99.0 wt.%, e.g., from about 50.0 wt.% to about 95.0 wt.%, such as from about 60.0 wt.% to about 85.0 wt.% of the second polyethylene, and (c) from 0 wt.%
to 74.0 wt.%, e.g., from about 1.0 wt.% to about 46.0 wt.%, such as from about 7.0 wt.% to about 32.0 wt.% of the third polyethylene.

In an embodiment, the invention relates to a method for producing a mono-layer microporous membrane. In an embodiment, the microporous membrane further comprises a second membrane. The second membrane can be, e.g., a microporous membrane; and can be, e.g., in the form of a layer in the first microporous membrane.

## [2] Materials used to produce the microporous membrane

The microporous membrane is made by extruding a mixture of polymer and diluent. The diluent can be a solvent for the polymer. When the polymer is soluble in or miscible with the diluent, the polymer-diluent mixture can be called a polymeric solution. When the polymer is polyolefin and the diluent is liquid paraffin, the mixture can be called a polyolefin solution. When the polymer is a mixture of polymers, e.g., a combination of polyolefins, it can be called a polymeric composition, e.g., a polyolefin composition. The polymer can be a mixture of individual polymer components or a reactor blend, for example. In an embodiment, the membrane is produced from diluent and a mixture of polyolefin, where the diluent is a solvent for the polyolefin mixture such as liquid paraffin. Examples of polyolefin useful in this embodiment will now be described in more detail.

The microporous membrane comprises a combination (e.g., a mixture, reactor blend, etc.) of polyethylenes, such as a mixture of polyethylenes.

While the invention is described in terms of these embodiments, it is not limited thereto, and the description of these embodiments is not meant to foreclose other embodiments within the broader scope of the invention.

### (1) The first polyethylene

The first polyethylene is an ethylene-alpha olefin copolymer, the polyethylene copolymer having an Mw $\leq 9.0 \times 10^5$, e.g., in the range of from about $1 \times 10^4$ to about $5 \times 10^5$, for example from about $3.0 \times 10^3$ to about $3.0 \times 10^5$, such as from $1.0 \times 10^4$ to $1.0 \times 10^5$. Optionally, the first polyethylene copolymer has an MWD $\leq 10.0$, e.g., from about 2.0 to about 10.0, such as from about 2.5 to about 4.5. The polyethylene is a copolymer of ethylene and an $\alpha$-olefin comonomer. The $\alpha$-olefin can be, e.g., propylene, butene-1, pentene-1, hexene-1, 4-methylpentene-1, octene-1, vinyl acetate, methyl methacrylate, styrene, other comonomer, or combinations thereof. In an embodiment, the $\alpha$-olefin is propylene, butene-1, pentene-1, hexene-1, 4-methylpentene-1, octene-1, and combinations thereof. In another embodiment, the comonomer is hexene-1 and/or octene-1. The amount of comonomer in the comonomer is $\leq 5.0$ mol.%, e.g., in the range of 1.0 mol.% to 5.0 mol.%, such as from 1.25 mol.% to 4.50 mol.%.

The polymer can be produced by any convenient process, such as those using a Ziegler-Natta or single-site polymerization catalyst. Optionally, the first polyethylene is
produced by metallocene catalyst. For example, the polymer can be produced according to the methods disclosed in US Patent No. 5,084,534 (such as the methods disclosed therein in examples 27 and 41) .

Tm is measured in accordance with JIS K7122 as follows. A sample of the first polyethylene is prepared as a 0.5-mm- thick molding that is melt-pressed at 210°C and then stored for about 24 hours while exposed to a temperature of about 25°C. The sample is then placed in a sample holder of a differential scanning calorimeter (Pyris Diamond DSC available from Perkin Elmer, Inc.) and exposed to a temperature of 25°C in a nitrogen atmosphere. The sample is then exposed to an increasing temperature (the first heating cycle) at a rate of 10°C/minute until a temperature of 230°C is reached. The sample is exposed to the 230°C temperature for 1 minute and then exposed to a decreasing temperature at a rate of 10°C/minute until a temperature of 30°C is reached. The sample is exposed to the 30°C temperature for 1 minute, and is then exposed to an increasing temperature at a rate of 10°C/minute (the second heating cycle) until a temperature of 230°C is reached. The DSC records the amount of heat flowing to the sample during the second heating cycle. Tm is the temperature of the maximum heat flow to the sample as recorded by the DSC in the temperature range of 30°C to 200°C. Polyethylene may show secondary melting peaks adjacent to the principal peak, and/or the end-of-melt transition, but for purposes herein, such secondary melting peaks are considered together as a single melting point, with the highest of these peaks being considered the Tm.

The first polyethylene has Tm $\leq 130.0$°C, e.g., in the range of from 120.0°C to 128.0°C, such as 120.0°C to 126.0°C, or 121.0°C to 124.0°C. In another embodiment, the first polyethylene has Tm in the range of from 122.0°C to 126.0°C.

### (2) The second polyethylene

The second polyethylene comprises ethylene-based homopolymer or copolymer having a Tm $\geq 131$°C, and an Mw $\leq 1.0 \times 10^6$, e.g., in the range of from $1.0 \times 10^5$ to $9.0 \times 10^5$, for example from about $4 \times 10^5$ to about $8 \times 10^5$.

Optionally, the second polyethylene has a molecular weight distribution ("MWD") $\leq$ 100, e.g., in the range of from about 1 to about 100, such as from about 3.0 to 20.0. For example, the second polyethylene can be one or more of a high density polyethylene ("HPDE"), a medium density polyethylene, a branched low density polyethylene, or a linear low density polyethylene. Optionally, the second polyethylene is HDPE. Optionally, the second polyethylene has terminal unsaturation. For example, the second polyethylene can have an amount of terminal unsaturation $\geq$ 0.20 per 10,000 carbon atoms, e.g., $\geq$ 5 per 10,000 carbon atoms, such as $\geq$ 10 per 10,000 carbon atoms. The amount of terminal unsaturation can be measured in accordance with the procedures described in PCT Publication WO 1997/23554, for example. In another embodiment, the second polyethylene has an amount of terminal unsaturation < 0.20 per 10,000 carbon atoms. The amount of second polyethylene is in the range of from 25.0 wt.% to 99.0 wt.%, or 50.0 wt.% to 95.0 wt.%, based on the total amount of polymer used to produce the membrane.

In an embodiment, the second polyethylene is at least one of (i) an ethylene homopolymer or (ii) a copolymer of ethylene and $\leq$ 10.0 mol.% of a comonomer such as propylene, butene-1, pentene-1, hexene-1, 4-methylpentene-1, octene-1, vinyl acetate, methyl methacrylate, styrene, other comonomer, and combinations thereof.

The second polyethylene can be produced by any suitable polymerization process, such as those using a Ziegler-Natta or single-site polymerization catalyst.

### (3) The third polyethylene

The third polyethylene comprises ethylene-based homopolymer or copolymer having an Mw > $1.0 \times 10^6$, e.g., in the range of $1.1 \times 10^6$ to about $5 \times 10^6$, for example from about $1.2 \times 10^6$ to about $3 \times 10^6$, such as about $2 \times 10^6$. Optionally, the third polyethylene has an MWD $\leq$ 100, e.g., from about 2 to about 100, such as from about 4 to about 20 or 4.5 to 10.0. For example, the third polyethylene can be an ultra-high molecular weight polyethylene ("UHMWPE"). The amount of the third polyethylene is in the range of from 0 wt.% to 74.0 wt.%, 1.0 wt.% to 46.0 wt.%, or 7.0 wt.% to 32.0 wt.%, based on the total weight of polymer used to produce the membrane. In an embodiment, the third polyethylene is at least one of (i) an ethylene homopolymer or (ii) a copolymer of ethylene and $\leq$ 10.0 mol.% of a comonomer such as propylene, butene-1, pentene-1, hexene-1, 4-methylpentene-1, octene-1, vinyl acetate, methyl methacrylate, styrene, other comonomer, and combinations thereof.

### (4) Characterization of polyethylene resin

The Mw of the first, second and third polyethylene is determined using a High Temperature Size Exclusion Chromatograph, or "SEC", (GPC PL 220, available from Polymer Laboratories), equipped with a differential refractive index detector (DRI). Three PLgel Mixed-B columns (available from Polymer Laboratories) are used. The nominal flow rate is 0.5 cm3/min, and the nominal injection volume was 300 $\mu$L. Transfer lines, columns, and the DRI detector are contained in an oven maintained at 145°C. The measurement is made in accordance with the procedure disclosed in "Macromolecules, Vol. 34, No. 19, pp. 6812-6820 (2001)".

The GPC solvent used is filtered Aldrich reagent grade 1,2,4-Trichlorobenzene (TCB) containing approximately 1000 ppm of butylated hydroxy toluene (BHT). The TCB is degassed with an online degasser prior to introduction into the SEC. Polymer solutions are prepared by placing dry polymer in a glass container, adding the desired amount of above TCB solvent, then heating the mixture at 160°C with continuous agitation for about 2 hours. The concentration of polymer in the polymer solution is 0.25 to 0.75mg/ml. The sample solution is filtered off-line before injecting into the GPC with 2$\mu$m filter using a model SP260 Sample Prep Station (available from Polymer Laboratories).

The separation efficiency of the column set is calibrated with a calibration curve generated using seventeen individual polystyrene standards ranging in Mp ("Mp" being defined as the peak in Mw) from about 580 to about 10,000,000, which is used to generate the calibration curve. The polystyrene standards are obtained from Polymer Laboratories (Amherst, MA). A calibration curve (logMp vs. retention volume) is generated by recording the retention volume at the peak in the DRI signal for each PS standard, and fitting this data set to a 2nd-order polynomial. Samples are analyzed using IGOR Pro, available from Wave Metrics, Inc.

The content of comonomer in the first polyethylene is determined by measurement of methyl group content in the copolymer. The instrument used is a 400 MHz Varian pulsed Fourier transform NMR spectrometer equipped with a variable temperature proton detection probe operating at 120°C. The polymer sample is dissolved in 1,1,2,2-tetrachloroethane-$d_2$ and transferred into a 5 mm glass NMR tube. The acquisition parameters are SW = 10 KHz, pulse width = 30°, acquisition time = 2 s, acquisition delay = 5 s and number of scans = 120. The methyl region from 0.85 to 1.05 ppm (MRA) is integrated separately from the aliphatic region integrated from 0 to 2.1 ppm (IA). The number of methyl groups/1000 C's is determined from the formula: (MRA X 1000/3) / (IA/2 X MIS/IS). MIS is the methyl integral scale between 0.85 and 1.05 ppm and IS is the aliphatic integral scale between 0 and 2.1 ppm.

**Additional polymer**

In addition to the polyethylene resin(s), the polyolefin mixture can optionally contain additional polymers such as a fourth polyolefin. The fourth polyolefin can be one or more homopolymer or copolymer of, e.g., polypropylene, polybutene-1, polypentene-1, poly-4-methylpentene-1, polyhexene-1, polyoctene-1, polyvinyl acetate, polymethyl methacrylate, polystyrene, etc. Optionally, the fourth polyolefin has an Mw in the range of about $1 \times 10^4$ to about $4 \times 10^6$. When used, the amount of the fourth polyolefin is generally in the range of < 20.0 wt.%, based on the weight of the polymer used to produce the microporous membrane, such as in the range of 0.5 wt.% to 10.0 wt.%. The polyolefin composition can also contain a polyethylene wax, e.g., one having an Mw of about $1 \times 10^3$ to about $1 \times 10^4$. When used, the amount of polyethylene wax is generally < about 20.0% wt.% of the combined weight of the first second and third polymers and the polyethylene wax used to produce the microporous membrane. In an embodiment, the amount of polyethylene wax is < 10.0 wt.%, such as in the range of 0.5 wt.% to 10 wt.%. When used, the amount of fourth polymer and/or polyethylene wax is not critical provided they are not used in an amount that would cause significant deterioration of the properties of the microporous polyolefin membrane. In an embodiment, the fourth polymer is polypropylene having an Mw $\geq 1.0 \times 10^6$ and a heat of fusion (second melt) $\geq 90$ J/g. Suitable polypropylenes are described in PCT Patent Publication No. WO2007/132942.

**[3] Method for producing the microporous membrane**

In an embodiment, the microporous membrane is a monolayer (i.e., single-layer) membrane produced from the extrudate. The extrudate can be produced from polyolefin and diluent as follows.

The microrporous membrane can be produced by a process comprising: (1) combining diluent (e.g., a membrane-forming solvent) and polyolefin, (2) extruding the combined diluent and polyolefin through a die to form an extrudate; (3) optionally cooling the extrudate to form a cooled extrudate, e.g., a gel-like sheet; (4) stretching the cooled extrudate in at least one planar direction, e.g., stretching in the transverse direction (TD), the machine direction (MD), or both; and (5) removing at least a portion of the diluent from the extrudate or cooled extrudate to form a membrane.

Optionally, the process further comprises (6) removing at least a portion of any remaining volatile species from the membrane at any time after step (5).

Optionally, the process further comprises (7) subjecting the membrane to a thermal treatment (such as heat setting or annealing) at any time after step (5).

Optionally, the process further comprises stretching the membrane in at least one planar direction at any time after step (5), e.g., between steps (6) and (7). For example, the process can further comprise (8) stretching the dried membrane of step (6) in the MD from the first dry length to a second dry length larger than the first dry length by a magnification factor in the range of from about 1.1 to about 1.5 and stretching the membrane in the TD from a first dry width to a second width that is larger than the first dry width by a magnification factor in the range of from about 1.1 to about 1.3; and then (9) decreasing the second dry width to a third dry width, the third dry width being in the range of from the first dry width to about 1.1 times larger than the first dry width.

An optional hot solvent treatment step, an optional heat setting step, an optional cross-linking step with ionizing radiation, and an optional hydrophilic treatment step, etc., as described in PCT Publication WO2008/016174 can be conducted if desired. Neither the number nor order of the optional steps is critical.

**(1) Combining polyolefin and diluent**

The polyolefin mixture as described above can be combined, e.g., by dry mixing or melt blending, and then the polyolefin mixture can be combined with at least one diluent to produce a polyolefin-diluent mixture, e.g., a polyolefin solution. Alternatively, the polyolefin mixture and diluent can be combined in a single step. The resins and solvents can be added sequentially, in parallel, or in a combination thereof. Alternatively, a polyolefin mixture can produced by first combining at least a portion of the resins to make a polyolefin composition, and then combining the polyolefin composition with at least one membrane-forming solvent (and optionally additional portions of the resins and/or additional resins) to produce a polyolefin solution. Optionally, the polyolefin solution contains additives such as one or more of antioxidant, fine silicate powder (pore-forming material), etc. The amount of such additives is not critical, provided they are not present in amounts large enough to adversely affect the membrane's properties. Generally, the amount of such additives in aggregate does not exceed 1 wt.%, based on the weight of the polyolefin solution.

The use of a diluent comprising liquid membrane-forming solvent can make it less difficult to conduct stretching at relatively high magnifications. The liquid solvents can be, for example, aliphatic, alicyclic or aromatic hydrocarbons such as nonane, decane, decalin, p-xylene, undecane, dodecene; liquid paraffin; mineral oil distillates having boiling points comparable to those of the above hydrocarbons; and phthalates liquid at room temperature, such as dibutyl phthalate, dioctyl phthalate, etc. The use of a non-volatile solvent such as liquid paraffin can make it easier to obtain a gel-like molding (or gel-like sheet) having a stable solvent content. In an embodiment, one or more solid solvents, which are miscible with the polyolefin solution or polyolefin composition during melt-blending but solid at room temperature, may be added to the liquid solvent. Such solid solvents can be, e.g., stearyl alcohol, ceryl alcohol, paraffin waxes, etc. Solid solvent can be used without liquid solvent, but in this case it can be more difficult to evenly stretch the gel-like sheet during step (4).

In an embodiment, the viscosity of the liquid solvent ranges from about 30 cSt to about 500 cSt, or from about 30 cSt to about 200 cSt, when measured at a temperature of 25°C. Although the choice of viscosity is not particularly critical, when the viscosity at 25°C is less than about 30 cSt, the polyolefin solution might foam, resulting in difficulty in blending. On the other hand, when the viscosity is more than about 500 cSt, it can be more difficult to remove the solvent during step (5). The polyolefin solution can contain additives such as one or more antioxidant. In an embodiment, the amount of such additives does not exceed 1 wt.% based on the weight of the polyolefin solution.

The amount of membrane-forming solvent used to produce the extrudate is not critical, and can be in the range, e.g., of from about 25 wt.% to about 99 wt.% based on the weight of the combined membrane-forming solvent and polyolefin composition with the balance being polymer, e.g., the combined first, second, and third polyethylene.

## (2) Extruding

The combined polyolefin composition and the diluent (a membrane-forming solvent in this case) are conducted from an extruder to a die.

The extrudate or cooled extrudate should have an appropriate thickness to produce, after the stretching steps, a final membrane having the desired thickness (generally 3 $\mu$m or more). For example, the extrudate can have a thickness in the range of about 0.1 mm to about 10 mm, or about 0.5 mm to 5 mm. Extrusion is generally conducted with the mixture of polyolefin composition and membrane-forming solvent in the molten state. When a sheet-forming die is used, the die lip is generally heated to an elevated temperature, e.g., in the range of 140°C to 250°C. Suitable process conditions for accomplishing the extrusion are disclosed in PCT Publications WO 2007/132942 and WO 2008/016174. The machine direction ("MD") is defined as the direction in which the extrudate is produced from the die. The transverse direction ("TD") is defined as the direction perpendicular to both MD and the thickness direction of the extrudate. The extrudate can be produced continuously from a die, or it can be produced from the die in portions (as is the case in batch processing) for example. The definitions of TD and MD are the same in both batch and continuous processing.

## (3) Extrudate cooling

In the method of the present invention, the extrudate is cooled.
For example, the extrudate can be exposed to a temperature in the range of 5°C to 40°C to form a cooled extrudate. Cooling rate is not particularly critical. For example, the extrudate can be cooled at a cooling rate of at least about 30°C/minute until the temperature of the extrudate (the cooled temperature) is approximately equal to the extrudate's gelation temperature (or lower). Process conditions for cooling can be the same as those disclosed in PCT Publications No. WO 2008/016174 and WO 2007/132942, for example.

## (4) Stretching the extrudate

The extrudate or cooled extrudate is stretched in at least one direction. The extrudate can be stretched by, for example, a tenter method, a roll method, an inflation method or a combination thereof, as described in PCT Publication No. WO 2008/016174, for example. The stretching may be conducted monoaxially or biaxially. In the method of the of the present invention, the stretching is biaxial.

In the case of biaxial stretching, any of simultaneous biaxial stretching, sequential stretching or multi-stage stretching (for instance, a combination of the simultaneous biaxial stretching and the sequential stretching) can be used, though simultaneous biaxial stretching is preferable. When biaxial stretching is used, the amount of magnification need not be the same in each stretching direction.

The stretching magnification factor can be, for example, 2 fold or more, preferably 3 to 30 fold in the case of monoaxial stretching. In the case of biaxial stretching, the stretching magnification factor can be, for example, 3 fold or more in any direction (e.g., in the range of 3 fold to 30 fold), such as 16 fold or more, e.g., 25 fold or more, in area magnification. In the method of the present invention, the stretching is from 9 fold to 49 fold in area magnification. Again, the amount of stretch in each direction need not be the same. The magnification factor operates multiplicatively on film size. For example, a film having an initial width (TD) of 2.0 cm that is stretched in TD to a magnification factor of 4 fold will have a final width of 8.0 cm. The machine direction ("MD") is a direction in the plane of the film (the extrudate in this instance) which is oriented approximately along the direction of travel as the film is formed, i.e., the longest axis of the film during production. The transverse direction ("TD") also lies in the plane of the film and is approximately perpendicular to both the machine direction and a third axis approximately parallel to the thickness of the film.

The stretching can be conducted while exposing the extrudate to a temperature (the stretching temperature) in the range of from about Tcd to Tm, where in this instance Tcd and Tm are the crystal dispersion temperature and melting peak of the polyethylene having the lowest melting peak among the polyethylenes used to produce the extrudate (usually the first polyethylene). The crystal dispersion temperature is determined by measuring the temperature characteristics of dynamic viscoelasticity according to ASTM D 4065. Where Tcd is in the range of about 90°C to 100°C, the stretching temperature can be from 90.0°C to 125.0°C; e.g., from about 100°C to 125.0°C, such as from 105°C to 125.0°C. In the method of the present invention the stretching temperature is ≤ (Tm - 10.0°C).

In an embodiment, the stretched extrudate undergoes an optional thermal treatment before diluent removal. In the thermal treatment, the stretched extrudate is exposed to a temperature that is higher (warmer) than the temperature to which the extrudate is exposed during stretching. The planar dimensions of the stretched extrudate (length in MD and width in TD) can be held constant while the stretched extrudate is exposed to the higher temperature. Since the extrudate contains polyolefin and diluent, its length and width are referred to as the "wet" length and "wet" width. In an embodiment, the stretched extrudate is exposed to a temperature in the range of 120.0°C to 125.0°C for a time sufficient to thermally treat the extrudate, e.g., a time in the range of 1 second to 100 seconds while the wet length and wet width are held constant, e.g., by using tenter clips to hold the stretched extrudate along its perimeter. In other words, during the thermal treatment, there is no magnification or demagnification (i.e., no dimensional change) of the stretched extrudate in MD or TD.

In this step and in other steps such as dry orientation and heat setting where the sample (e.g., the extrudate, dried extrudate, membrane, etc.) is exposed to an elevated temperature, this exposure can be accomplished by heating air and then conveying the heated air into proximity with the sample. The temperature of the heated air, which is generally controlled at a set point equal to the desired temperature, is then conducted toward the sample through a plenum for example. Other methods for exposing the sample to an elevated temperature, including conventional methods such as exposing the sample to a heated surface, infra-red heating in an oven, etc. can be used with or instead heated air.

### (5) Diluent removal

At least a portion of the diluent is removed (or displaced) from the stretched extrudate to form a dried membrane. A displacing (or "washing") solvent can be used to remove (wash away, or displace) the diluent, as described in PCT Publication No. WO 2008/016174, for example.

### (6) Drying the membrane

In an embodiment, at least a portion of any remaining volatile species (e.g., washing solvent) is removed from the dried membrane after diluent removal. Any method capable of removing the washing solvent can be used, including conventional methods such as heat-drying, wind-drying (moving air), etc. Process conditions for removing volatile species such as washing solvent can be the same as those disclosed in PCT Publication No. WO 2008/016174, for example.

### (7) Thermal treatment

In the method of the present invention, the membrane is subjected to a thermal treatment such as heat setting. During heat-setting, the membrane is, e.g., exposed to a temperature in the range of from about Tcd to about Tm, for example from 90.0°C to 130.0°C, from about 100°C to 128°C or 105°C to 125°C. In this instance Tm is the melting peak of the polymer having the lowest melting peak among the polymers used to produce the membrane, e.g., the first polyethylene.

### (8) Stretching the membrane (dry orientation)

Optionally, the dried membrane of the step (6) can be stretched (called "dry stretching" since at least a portion of the diluent has been removed or displaced) in at least one direction between the step (6) and (7). A dried membrane that has been dry stretched is called an "oriented" membrane. Before dry stretching, the dried membrane has an initial size in MD (a first dry length) and an initial size in TD (a first dry width). As used herein, the term "first dry width" refers to the size of the dried membrane in the TD prior to the start of dry orientation. The term "first dry length" refers to the size of the dried membrane in the MD prior to the start of dry orientation. Tenter stretching equipment of the kind described in WO 2008/016174 can be used, for example.

The dried membrane can be stretched in MD from the first dry length to a second dry length that is larger than the first dry length by a magnification factor (the "MD dry stretching magnification factor") in the range of from about 1.1 to about 1.5. When TD dry stretching is used, the dried membrane can be stretched in TD from the first dry width to a second dry width that is larger than the first dry width by a magnification factor (the "TD dry stretching magnification factor"). Optionally, the TD dry stretching magnification factor is ≤ the MD dry stretching magnification factor. The TD dry stretching magnification factor can be in the range of from about 1.1 to about 1.3. The dry stretching (also called re-stretching since the membrane-forming solvent -containing extrudate has already been stretched) can be sequential or simultaneous in MD and TD. Since TD heat shrinkage generally has a greater effect on battery properties than does MD heat shrinkage, the amount of TD magnification generally does not exceed the amount of MD magnification. When TD dry stretching is used, the dry stretching can be simultaneous in MD and TD or sequential. When the dry stretching is sequential, generally MD stretching is conducted first followed by TD stretching.

The dry stretching can be conducted while exposing the dried membrane to a temperature ≤ Tm, e.g., in the range of from about Tcd-30°C to Tm. In this instance Tm is the melting peak of the polymer having the lowest melting peak among the polymers used to produce the membrane, e.g., the first polyethylene. In an embodiment, the stretching temperature is conducted with the membrane exposed to a temperature in the range of from about 70.0 to about 130.0°C, for example from about 80°C to about 129.0°C. In an embodiment, the MD stretching is conducted before TD stretching, and

(i) the MD stretching is conducted while the membrane is exposed to a first temperature in the range of Tcd - 30°C to about Tm - 10°C, for example 70.0°C to 129.0°C, or about 80°C to about 125°C, and
(ii) the TD stretching is conducted while the membrane is exposed to a second temperature that is higher than the first temperature but lower than Tm, for example 70.0°C to 129.0°C, or about 105°C to about 125°C, or about 110°C to about 120°C.

In an embodiment, the total MD dry stretching magnification factor is in the range of from about 1.1 to about 1.5, such as 1.2 to 1.4; the total TD dry stretching magnification factor is in the range of from about 1.1 to about 1.3, such as 1.15 to 1.25; the MD dry stretching is conducted before the TD dry stretching, the MD dry stretching is conducted while the membrane is exposed to a temperature in the range of 80.0°C to about 120.0°C, and the TD dry stretching is conducted while the membrane is exposed to a temperature in the range of 115.0°C to about 130.0°C, but less than Tm.

The stretching rate is preferably 3 %/second or more in the stretching direction (MD or TD), and the rate can be independently selected for MD and TD stretching. The stretching rate is preferably 5 %/second or more, more preferably 10 %/second or more, e.g., in the range of 5% /second to 25%/second. Though not particularly critical, the upper limit of the stretching rate is preferably 50 %/second to prevent rupture of the membrane.

**(9) Controlled reduction of the membrane's width (Heat-relaxing of the membrane)**

Following the dry stretching, the dried membrane is optionally subjected to a controlled reduction in width from the second dry width to a third dry width, the third dry width being in the range of from the first dry width to about 1.1 times larger than the first dry width. The width reduction generally conducted while the membrane is exposed to a temperature ≥ Tcd - 30°C, but no greater than Tm of the first polyethylene. For example, during width reduction the membrane can be exposed to a temperature in the range of from 70.0°C to about 130.0°C, such as from about 115°C to about 130.0°C, e.g., from about 120°C to about 128°C. In an embodiment, the decreasing of the membrane's width is conducted while the membrane is exposed to a temperature that is lower than Tm of the first polyethylene. In an embodiment, the third dry width is in the range of from 1.0 times larger than the first dry width to about 1.1 times larger than the first dry width.

It is believed that exposing the membrane to a temperature during the controlled width reduction that is ≥ the temperature to which the membrane was exposed during the TD stretching leads to greater resistance to heat shrinkage in the finished membrane.

**[4] The properties of the microporous membrane**

The final microporous membrane generally comprises the polymer used to produce the extrudate. A small amount of diluent or other species introduced during processing can also be present, generally in amounts less than 1 wt.% based on the weight of the microporous polyolefin membrane. A small amount of polymer molecular weight degradation might occur during processing, but this is acceptable. In an embodiment, molecular weight degradation during processing, if any, causes the value of MWD of the polymer in the membrane to differ from the MWD of the first or second polyethylene before extrusion by no more than, e.g., about 10%, or no more than about 1%, or no more than about 0.1%.

While the extrudate and the microporous membrane can contain copolymers, inorganic species (such as species containing silicon and/or aluminum atoms), and/or heat-resistant polymers such as those described in PCT Publications WO 2007/132942 and WO 2008/016174, these are not required. In an embodiment, the extrudate and membrane are substantially free of such materials. Substantially free in this context means the amount of such materials in the microporous membrane is less than 1 wt.%, based on the total weight of the polymer used to produce the extrudate.

## (1) Structure, properties and composition

The following embodiments further exemplify the invention. These embodiments are descriptions of aspects of the invention and are not meant to foreclose other embodiments within the broader scope of the invention.

In one embodiment, the microporous membrane comprises from about 4.0 wt.% to about 17.0 wt.% of ethylene-alpha olefin copolymer (e.g., ethylene-hexene copolymer and/or ethylene-octene copolymer), based on the weight of the membrane, the copolymer having an Mw in the range of $3.0 \times 10^3$ to $3.0 \times 10^5$, an MWD in the range of 2 to 10, and a comonomer content in the range of 1.0 mol.% to 5.0 mol.%. Optionally, the copolymer has a Tm in the range of 120.0°C to 128.0°C. Optionally, the membrane further comprises from 50.0 wt.% to 95.0 wt.% of a second polyolefin (comprising, e.g., polyethylene homopolymer or copolymer) having an Mw $\leq 1.0 \times 10^6$ and a Tm $\geq 131.0$°C and from 1.0 wt.% to 46.0 wt.% of a third polyolefin (comprising, e.g., polyethylene homopolymer or copolymer) having an Mw $> 1.0 \times 10^6$. The weight percents are based on the weight of the membrane.

In another embodiment, the microporous membrane comprises from about 8.0 wt.% to about 13.0 wt.% of a polyethylene-hexene and/or polyethylene-octene copolymer, the copolymer having an Mw in the range of $1.0 \times 10^4$ to $1.0 \times 10^5$, an MWD in the range of from 2.5 to 4.5, and a comonomer amount in the range of 1.25 mol.% to 4.50 mol.%. Optionally, the copolymer has a Tm in the range of from 122.0°C to 126.0°C, such as from about 123.0°C to 125.0°C. Optionally, the membrane further comprises from 60.0 wt.% to 85.0 wt.% of a second polyethylene comprising polyethylene homopolymer or copolymer, the second polyethylene having an Mw in the range of from $1.0 \times 10^5$ to $9.0 \times 10^5$ and a Tm $\geq 131.0$°C and from about 7.0 wt.% to about 32.0 wt.% of a third polyethylene comprising polyethylene homopolymer or copolymer having an Mw in the range of $1.1 \times 10^6$ to $5.0 \times 10^6$. The weight percents are based on the weight of the membrane.

The membranes provide a good balance of membrane permeability, shutdown temperature, and shutdown speed. When comonomer content is < 1.0 mol.%, it is more difficult to produce a membrane having a suitable permeability. When comonomer content is > 5.0 mol.%, it is more difficult to produce a microporous membrane having low shutdown temperature and rapid shutdown speed.

In an embodiment, the membrane's thickness is generally in the range of from about 1 $\mu$m to about 100 $\mu$m, e.g., from about 5 $\mu$m to about 30 $\mu$m. The thickness of the microporous membrane can be measured by a contact thickness meter at 1 cm longitudinal intervals over the width of 20 cm, and then averaged to yield the membrane thickness. Thickness meters such as the Litematic available from Mitsutoyo Corporation are suitable. This method is also suitable for measuring thickness variation after heat compression, as described below. Non-contact thickness measurements are also suitable, e.g., optical thickness measurement methods.

The microporous membrane has a shutdown temperature $\leq 130.5$°C and a shutdown activation energy E2 $\geq 3.5 \times 10^3$ J/mol, and may have one or more of the following additional properties below.

### A. Porosity of about 25% to about 80%

The membrane's porosity is measured conventionally by comparing the membrane's actual weight to the weight of an equivalent non-porous membrane of 100% polyethylene (equivalent in the sense of having the same length, width, and thickness). Porosity is then determined using the formula: Porosity % = 100 x (w2-w1)/w2, wherein "w1" is the actual weight of the microporous membrane and "w2" is the weight of an equivalent non-porous membrane of 100% polyethylene having the same size and thickness.

In an embodiment, the membrane has a porosity $\geq 25$%, e.g., in the range of about 25% to about 80%, or 30% to 60%. The membrane's porosity is measured conventionally by comparing the membrane's actual weight to the weight of an equivalent non-porous membrane of the same composition (equivalent in the sense of having the same length, width, and thickness).

### B. Normalized air permeability $\leq$ 8.0 x 10$^2$ seconds/100cm$^3$/20-$\mu$m

The membrane's air permeability value is normalized to the value for an equivalent membrane having a film thickness of 20$\mu$m. The membrane's air permeability value is thus expressed in units of "seconds/100 cm$^3$/20$\mu$m". Normalized air permeability is measured according to JIS P8117, and the results are normalized to the permeability value of an equivalent membrane having a thickness of 20$\mu$m using the equation A = 20$\mu$m *(X)/T$_1$, where X is the measured air permeability of a membrane having an actual thickness T$_1$ and A is the normalized air permeability of an equivalent membrane having a thickness of 20$\mu$m.

In an embodiment, the normalized air permeability is $\leq 8.0 \times 10^2$ sec/100cm$^3$/20$\mu$m, e.g., in the range of $1.0 \times 10^2$ sec/100cm$^3$/20$\mu$m to $8.0 \times 10^2$ sec/100 cm$^3$/20$\mu$m. In another embodiment, the normalized air permeability is in the range of about in the range of $1.0 \times 10^2$ sec/100 cm$^3$/20$\mu$m to $7.0 \times 10^2$ sec/100 cm$^3$/20$\mu$m, or $1.0 \times 10^2$ sec/100 cm$^3$/20$\mu$m to about $6.5 \times 10^2$ sec/100 cm$^3$/20$\mu$m, or about $1.5 \times 10^2$ sec/100 cm$^3$/20$\mu$m to about $5.0 \times 10^2$ sec/100 cm$^3$/20$\mu$m.

## C. Normalized pin puncture strength of about 3,000 mN/20 $\mu$m or more

Pin puncture strength is defined as the maximum load measured (in grams Force or "gF") when a microporous membrane having a thickness of $T_1$ is pricked with a needle of 1 mm in diameter with a spherical end surface (radius R of curvature: 0.5 mm) at a speed of 2 mm/second. The pin puncture strength is normalized to a value at a membrane thickness of 1.0 $\mu$m using the equation $L_2 = (L_1)/T_1$, where $L_1$ is the measured pin puncture strength, $L_2$ is the normalized pin puncture strength, and $T_1$ is the average thickness of the membrane.

In an embodiment, the pin puncture strength of the membrane (normalized to a thickness of 20 $\mu$m) is $3.0 \times 10^3$ mN/20 $\mu$m or more, or $3.5 \times 10^3$ mN/20 $\mu$m or more, or in the range of $3.0 \times 10^3$ mN/20 $\mu$m to $5.0 \times 10^3$ mN/20 $\mu$m.

## D. 105°C Heat shrinkage ratio $\leq$ 10% in at least one planar direction

The shrinkage ratio of the microporous membrane orthogonal planar directions (e.g., machine direction or transverse direction) is measured as follows:

(i) Measure the size of a test piece of microporous membrane at ambient temperature in both the machine direction and transverse direction, (ii) equilibrate the test piece of the microporous membrane at a temperature of 105°C for 8 hours with no applied load, and then (iii) measure the size of the membrane in both MD and TD. The 105°C heat shrinkage ratio in either MD or TD can be obtained by dividing the result of measurement (i) by the result of measurement (ii) and expressing the resulting quotient as a percent.

In an embodiment, the heat shrinkage ratio measured at 105°C in at least one planar direction is $\leq$ 10%, or alternatively $\leq$ 9.0%, or alternatively $\leq$ 8.5%, or alternatively $\leq$ 8%. In another embodiment, the 105°C heat shrinkage ratio in the membrane's TD is $\leq$ 10%, or alternatively $\leq$ 9.0%, or alternatively $\leq$ 8.5%, or alternatively $\leq$ 8.0%, or alternatively in the range of 2.0% to 8.0%. In yet another embodiment, the membrane's MD heat shrinkage ratio is $\leq$ 10% and the membrane's transverse direction heat shrinkage ratio is $\leq$ 10%, or $\leq$ 9.0.

## E. Shutdown temperature

The microporous membrane's shutdown temperature is measured by the method disclosed in PCT publication WO2007/052663.

According to this method, the microporous membrane is exposed to an increasing temperature (5°C/minute beginning at 30°C) while measuring the membrane's air permeability. The microporous membrane's shutdown temperature is defined as the temperature at which the microporous membrane's air permeability (Gurley Value) first exceeds 100,000 seconds/100 cm$^3$. The microporous membrane's air permeability is measured according to JIS P8117 using an air permeability meter (EGO-1T available from Asahi Seiko Co., Ltd.).

In an embodiment, the membrane's shutdown temperature is in the range of 125°C to 130°C, e.g., in the range of 126°C to 129°C.

## F. Rupture temperature $\geq$ 150°C

Rupture temperature is measured as follows. A microporous membrane of 5 cm x 5 cm is sandwiched by blocks each having a circular opening of 12 mm in diameter, and a tungsten carbide ball of 10 mm in diameter was placed on the microporous membrane in the circular opening. The membrane is then exposed to an increasing temperature at a rate of 5°C/minute. The membrane's rupture temperature is defined as the temperature at which the ball first breaks through the membrane. The membrane's meltdown temperature is defined as the temperature at which the ball completely penetrates the sample, i.e., the temperature at which the sample breaks, generally at a temperature in the range of about 140°C to about 200°C.

In an embodiment, the meltdown temperature is in the range of from 150.0°C to 200.0°C.

**G. Shutdown Activation Energy E2 ≥ 3,500**

The membrane's shutdown activation energy E2 is directly related to the speed at which membrane permeability decreases near the membrane's shutdown temperature (the shutdown speed). Shutdown activation energy determined from the rate of change in membrane normalized air permeability (Gurley value measured in units of seconds/100 cm$^3$/20 $\mu$m) as a function of the reciprocal of absolute temperature in the range of 1/T < 0.00248 (T in Kelvin).

Specifically, E2 is determined from the formula:

$$\text{Ln } \Delta G = A_0 - E2/RT,$$

where

$\Delta$G: change in normalized air permeability (Gurley value in units of sec/100cm$^3$/20$\mu$m
T: absolute temperature (K)
E2: shutdown activation energy (J/mol)
$A_0$ = additive constant, and
R=8.31 (J/mol K).

Figure 1 shows the relationship between membrane temperature and air permeability. The temperature-permeability curve exhibits two distinct regions: a first region showing the change in permeability at the start of shutdown and a second region showing the change in permeability as shutdown comes to completion as a result of polymer migration into the membrane's micropores thereby closing the micropores. When the change in the natural logarithm of permeability is plotted as a function of the reciprocal of absolute temperature, the slope of the resulting curve shows the rate of permeability change, corresponding to shutdown speed. See Figure 2. The value of E2 is calculated from slope E2/RT using at least five data point in the permeability range of 9.0 x 10$^3$ seconds/100 cm3/20 $\mu$m to 10.0 x 10$^3$ seconds/100 cm$^3$/20 $\mu$m.

The membrane's shutdown activation energy is ≥ 3.50 x 10$^3$ J/mol, e.g., ≥ 4.00 x 10$^3$ J/mol. Optionally, the membrane's shutdown activation energy is in the range of 3.60 x 10.$^3$ J/mol to 5.50 x 10$^3$ J/mol.

**Battery separator and battery**

The microporous membrane of this invention has well-balanced properties of a shutdown temperature, air permeability, and pin puncture strength. The microporous membrane is permeable liquids (aqueous and non-aqueous) at atmospheric pressure. Thus, the microporous membrane is useful as a battery separator, filtration membrane, and so on. The microporous membrane can be particularly applied to a secondary battery separator, such as a nickel-hydrogen battery, nickel-cadmium battery, nickel-zinc battery, silver-zinc battery, lithium-ion battery, lithium-ion polymer battery separator. In an embodiment, the membrane is used as a battery separator film in lithium-ion secondary batteries.

Such batteries are described in PCT publication WO 2008/016174 .

This invention will be described in more detail with reference to Examples below without intention of restricting the scope of this invention.

[7] **Examples**

*Example 1*

(1) Preparation of first polyolefin solution

A polyolefin blend is prepared by combining (a) 8.2 wt.% of first polyethylene (a polyethylene copolymer) having a weight average molecular weight ("Mw") of 3.8 x 10$^4$, a molecular weight distribution ("MWD") of 3.0 with (b) 73.8 wt.% of second polyethylene having an Mw of 5.6 x 10$^5$, an MWD of 4.1, (c) 18 wt.% of third polyethylene having an Mw of 2.0 x 10$^6$ and a MWD of 5 (the first polyethylene).

Twenty-five parts by weight of the resultant first polyolefin blend is charged into a strong-blending double-screw extruder having an inner diameter of 58 mm and L/D of 42, and 65 parts by mass of liquid paraffin (50 cst at 40°C) is supplied to the double-screw extruder via a side feeder to produce a polyolefin solution.

**(2) Production of membrane**

The polyolefin solution is supplied from the double-screw extruders to a single-layer-extruding T-die, and extruded therefrom to form an extrudate. The extrudate is cooled while passing through cooling rollers controlled at 20°C, to form a gel-like sheet, which is simultaneously biaxially stretched at 115.0°C to a magnification factor of 5 fold in both MD and TD by a tenter-stretching machine. The stretched gel-like sheet is fixed to an aluminum frame of 20 cm x 20 cm, immersed in a bath of methylene chloride controlled at 25°C to remove liquid paraffin with vibration of 100 rpm for 3 minutes, and dried by air flow at room temperature. The dried membrane is re-stretched by a batch-stretching machine to a magnification factor of 1.4 fold in the transverse direction (TD) while exposed to a temperature of 115.0°C, and then relaxed (tenter clips re-adjusted to a narrower width) to a TD magnification factor of 1.2 fold at the same temperature, the magnification factors being based on the width of the membrane (TD) before dry stretching. The re-stretched membrane, which remains fixed to the batch-stretching machine, is heat-set at 115.0°C for 10 minutes to produce a monolayer microporous membrane. The properties of the membrane are shown in Table 1.

*Example 2*

Example 1 is repeated except that the amount of the first polyethylene is 12.3 wt.%. The properties of the membrane are shown in Table 1.

*Example 3*

Example 1 is repeated except that the amount of the first polyethylene is 16.4 wt.%. The properties of the membrane are shown in Table 1.

*Example 4*

Example 1 is repeated except that the first polyethylene is copolymer of ethylene with hexene. The copolymer has Mw of $8.5 \times 10^4$ and comonomer content of 1.9 mol.%. The properties of the membrane are shown in Table 1.

*Example 5*

Example 4 is repeated except that the amount of the first polyethylene is 16.4 wt.%. The properties of the membrane are shown in Table 1.

*Example 6*

Example 3 is repeated except that the comonomer content of first polyethylene is 1.4 mol.% and Mw is $1.2 \times 10^5$. The properties of the membrane are shown in Table 1.

*Example 7*

Example 4 is repeated except that the comonomer content of first polyethylene is 1.4 mol.% and Mw is $1.7 \times 10^5$. The properties of the membrane are shown in Table 1.

*Example 8*

Example 7 is repeated except that the amount of the first polyethylene is 16.4 wt.%. The properties of the membrane are shown in Table 1.

*Example 9*

Example 5 is repeated except that the comonomer content of first polyethylene is 1.3 mol.% and Mw is $2.6 \times 10^5$. The properties of the membrane are shown in Table 1.

*Example 10*

Example 3 is repeated except that the first polyethylene is a copolymer of ethylene with propylene, having comonomer content of 2.7 mol % and Mw of $7.5 \times 10^5$. The properties of the membrane are shown in Table 1.

*Comparative Example 1*

Example 3 is repeated except that the first polyethylene is ethylene homopolymer having Mw of $1.7 \times 10^5$. The properties of the membrane are shown in Table 1.

## PROPERTIES

The properties of the multi-layer microporous membranes of Examples 1-8 and Comparative Examples 1 are measured by the procedures described in Section 4. The results are shown in Table 1.

The membranes of Examples 1-10 exhibit improved shutdown temperature and/or improved shutdown speed over the membrane of Comparative Example 1. Examples 1-3 show the microporous membrane having desirable low shutdown temperature and fast shutdown speed can be produced by using a polyolefin copolymer having relatively low Mw, narrow MWD, and relatively low comonomer content. Low shutdown temperature and high shutdown speed is achieved even using relatively large amounts of the copolymer. A comparison between Examples 1-3 and Examples 4-6 shows that a relatively fast shutdown speed can be achieved even at a relatively broader MWD provided a lower comonomer content is needed is used. Examples 7-10 show desirable results, however, shutdown speed is less rapid than is the case for membranes containing copolymer having a lower Mw. It is believed that at relatively high copolymer Mw (Mw $\geq 1 \times 10^5$) there is a slight increase in the probability of the occurrence of a critical segment length in the polymer chain sufficient to reduce chain mobility.

The invention includes the following embodiments:

[1] A microporous membrane according to claim 1, wherein the copolymer comprises ethylene-hexene copolymer and/or ethylene-octene copolymer having an MWD in the range of 2.0 to 10.0 and a Tm in the range of 120.0°C to 128.0°C.

[2] The microporous membrane of [1] or claim 1, wherein the copolymer has an Mw in the range of from 1.0 to $10^4$ to $1.0 \times 10^5$, an MWD in the range of 2.5 to 4.5, a comonomer content in the range of 1.25 mol.% to 4.50 mol.%, and a Tm in the range of 123.0°C to 125.0°C.

[3] A battery separator film comprising the microporous membrane of [1] or [2].

When numerical lower limits and numerical upper limits are listed herein, ranges from any lower limit to any upper limit are contemplated.

**Table 1**

| No. | Example 1 | Example 2 | Example 3 | Example 4 | Example 5 | Example 6 |
|---|---|---|---|---|---|---|
| **Resin Composition** | | | | | | |
| First Polyethylene | | | | | | |
| Mw | $3.8 \times 10^4$ | $3.8 \times 10^4$ | $3.8 \times 10^4$ | $8.5 \times 10^4$ | $8.5 \times 10^4$ | $1.2 \times 10^5$ |
| Mw/Mn | 3.0 | 3.0 | 3.0 | 4.0 | 4.0 | 2.5 |
| % by mass | 8.2 | 12.3 | 16.4 | 8.2 | 16.4 | 16.4 |
| comonomer | Octene | Octene | Octene | Hexene | Hexene | Octene |
| % by mol | 2.4 | 2.4 | 2.4 | 1.9 | 1.9 | 1.4 |
| Tm (°C) | 125.8 | 125.8 | 125.8 | 124.1 | 124.1 | 123.5 |
| Second Polyethylene | | | | | | |
| Mw | $5.6 \times 10^5$ | $5.6 \times 10^5$ | $5.6 \times 10^5$ | $5.6 \times 10^5$ | $5.6 \times 10^5$ | $5.6 \times 10^5$ |
| Mw/Mn | 4.1 | 4.1 | 4.1 | 4.1 | 4.1 | 4.1 |
| % by mass | 73.8 | 69.7 | 65.6 | 73.8 | 65.6 | 65.6 |
| Third Polyethylene | | | | | | |
| Mw | $2.0 \times 10^6$ | $2.0 \times 10^6$ | $2.0 \times 10^6$ | $2.0 \times 10^6$ | $2.0 \times 10^6$ | $2.0 \times 10^6$ |
| Mw/Mn | 5.1 | 5.1 | 5.1 | 5.1 | 5.1 | 5.1 |
| % by mass | 18 | 18 | 18 | 18 | 18 | 18 |
| **Production Condition** | | | | | | |
| **Polymer concentration** | 25 | 25 | 25 | 25 | 25 | 25 |
| Stretching of Gel-Like sheet | | | | | | |
| Temperature (°C) | 115 | 115 | 115 | 115 | 115 | 115 |
| Magnification (MD x TD)[(3)] | 5 x 5 | 5 x 5 | 5 x 5 | 5 x 5 | 5 x 5 | 5 x 5 |
| Stretching of dried membrane | | | | | | |
| Temperature(°C) | 115 | 115 | 115 | 115 | 115 | 115 |
| Magnification (TD) | 1.4 | 1.4 | 1.4 | 1.4 | 1.4 | 1.4 |
| Relaxation of re-stretched membrane | | | | | | |
| Temperature(°C) | 115 | 115 | 115 | 115 | 115 | 115 |
| Final magnification (TD) | 1.2 | 1.2 | 1.2 | 1.2 | 1.2 | 1.2 |
| Heat setting treatment | | | | | | |
| Temperature(°C) | 115 | 115 | 115 | 115 | 115 | 115 |
| Time (min) | 10 | 10 | 10 | 10 | 10 | 10 |
| **Properties** | | | | | | |
| Average thickness (μm) | 16.0 | 19.1 | 22.9 | 22.2 | 13.4 | 25.9 |
| Normalized Air Permeability (sec/100cm³/20μm) | 337 | 220 | 250 | 323 | 1649 | 773 |
| Porosity % | 44.0 | 48.5 | 49.8 | 42.4 | 31.2 | 41.5 |
| Normalized Puncture Strength (mN/20μm) | 3400 | 1800 | 1700 | 1900 | 2800 | 1300 |
| Heat shrinkage MD/TD (%) | 7.5/7.5 | 7.2/7.6 | 8.0/7.7 | 7.4/5.7 | 4.8/4.9 | 2.9/2.3 |
| Shut Down Temp. °C | 129.8 | 126.3 | 127.0 | 128.3 | 122.8 | 125.9 |
| Shut Down Activation Energy | 4200 | 4200 | 4200 | 4000 | 4000 | 4200 |
| Rupture Temp. °C | 145.7 | 145.2 | 146.0 | 145.9 | 144.0 | 144.2 |

**Table 1 (continued)**

| No. | Example 7 | Example 8 | Example 9 | Example 10 | Comparative Example 1 |
|---|---|---|---|---|---|
| **Resin Composition** | | | | | |
| First Polyethylene | | | | | |
| Mw | $1.7 \times 10^5$ | $1.7 \times 10^5$ | $2.6 \times 10^5$ | $7.5 \times 10^5$ | $1.7 \times 10^5$ |
| Mw/Mn | 2.8 | 2.8 | 2.5 | 3.6 | 3.0 |
| % by mass | 8.2 | 16.4 | 16.4 | 16.4 | 16.4 |
| comonomer | Hexene | Hexene | Hexene | Propylene | - |
| % by mol | 1.4 | 1.4 | 1.3 | 2.7 | 0 |
| Tm (°C) | 123.0 | 123.0 | 122.5 | 120.0 | 130.4 |
| Second Polyethylene | | | | | |
| Mw | $5.6 \times 10^5$ | $5.6 \times 10^5$ | $5.6 \times 10^5$ | $5.6 \times 10^5$ | $5.6 \times 10^5$ |
| Mw/Mn | 4.1 | 4.1 | 4.1 | 4.1 | 4.1 |
| % by mass | 73.8 | 65.6 | 65.6 | 65.6 | 65.6 |
| Third Polyethylene | | | | | |
| Mw | $2.0 \times 10^6$ | $2.0 \times 10^6$ | $2.0 \times 10^6$ | $2.0 \times 10^6$ | $2.0 \times 10^6$ |
| Mw/Mn | 5.1 | 5.1 | 5.1 | 5.1 | 5.1 |
| % by mass | 18 | 18 | 18 | 18 | 18 |
| **Production Condition** | | | | | |
| **Polymer concentration** | 25 | 25 | 25 | 25 | 25 |
| Stretching of Gel-Like sheet | | | | | |
| Temperature (°C) | 115 | 115 | 115 | 115 | 115 |
| Magnification (MD x TD)[3] | 5 x 5 | 5 x 5 | 5 x 5 | 5 x 5 | 5 x 5 |
| Stretching of dried membrane | | | | | |
| Temperature(°C) | 115 | 115 | 115 | 115 | 115 |
| Magnification (TD) | 1.4 | 1.4 | 1.4 | 1.4 | 1.4 |
| Relaxation of re-stretched membrane | | | | | |
| Temperature(°C) | 115 | 115 | 115 | 115 | 115 |
| Final magnification (TD) | 1.2 | 1.2 | 1.2 | 1.2 | 1.2 |
| Heat setting treatment | | | | | |
| Temperature(°C) | 115 | 115 | 115 | 115 | 115 |
| Time (min) | 10 | 10 | 10 | 10 | 10 |
| **Properties** | | | | | |
| Average thickness (μm) | 22.3 | 19.4 | 14.3 | 10.0 | 12.0 |
| Normalized Air Permeability (sec/100cm³/20μm) | 329 | 721 | 993 | 795 | 388 |
| Porosity % | 46.6 | 43.8 | 37.1 | 37.0 | 38.0 |
| Normalized Puncture Strength (mN/20μm) | 1800 | 1600 | 1800 | 2500 | 2200 |
| Heat shrinkage MD/TD (%) | 6.4/5.8 | 4.7/4.7 | 8.8/7.2 | 5.7/5.8 | 1.7/1.8 |
| Shut Down Temp. °C | 129.1 | 126.0 | 126.2 | 129.2 | 131.6 |
| Shut Down Activation Energy | 3500 | 3500 | 4000 | 3800 | 4000 |
| Rupture Temp. °C | 145.3 | 144.4 | 144.2 | 144.4 | 144.5 |

## Claims

1. A microporous membrane comprising:

   (i) 1.0 wt.% to 20.0 wt.%, based on the weight of the membrane, of an ethylene-alpha olefin copolymer having a melting peak Tm ≤ 130.0°C, an Mw ≤ 9.0 x 10⁵, an MWD ≤ 10.0, and a comonomer content in the range of from 1.0 to 5.0 mol.%; wherein the copolymer is a copolymer of ethylene and a second alpha-olefin, the second alpha olefin being hexene-1 and/or octene-1;
   (ii) 25.0 wt.% to 99.0 wt.%, based on the weight of the membrane, of a second polyethylene having a melting peak Tm ≥ 131.0°C and an Mw ≤ 1 × 10⁶; and
   (iii) 0 wt.% to 74.0 wt.%, based on the weight of the membrane, of a third polyethylene having an Mw > 1.0 x 10⁶;

   wherein:
   the membrane has a shutdown temperature ≤ 130.5°C and a shutdown activation energy E2 ≥ 3.5 x 10³ J/mol, wherein the shutdown temperature and shutdown activation energy are measured according to the methods set out in the description, and Tm is measured according to JIS K7122.

2. The microporous membrane according to claim 2, wherein the membrane comprises ethylene-alpha olefin copolymer in an amount in the range of 8.0 to 13.0 wt.%, based on the weight of the membrane.

3. The microporous membrane according to claim 1 or 2, wherein the ethylene-alpha olefin copolymer has a melting peak Tm in the range of 122.0°C to 126.0°C.

4. The microporous membrane according to any of claims 1 to 3, wherein the ethylene-alpha olefin copolymer has an Mw in the range of from 1.0 x 10⁴ to 1.0 x 10⁵.

5. The microporous membrane according to any of claims 1 to 4, wherein the ethylene-alpha olefin copolymer has an MWD in the range of 2.5 to 4.5.

6. A battery separator film comprising the microporous membrane of any preceding claim.

**7.** A method for producing a microporous membrane, comprising:

(1) extruding a mixture of diluent and polymer, the polymer comprising (i) 1.0 wt.% to 20.0 wt.%, based on the weight of the polymer, of an ethylene-alpha olefin copolymer having a melting peak $Tm \leq 130.0°C$, an $Mw \leq 9.0 \times 10^5$, an $MWD \leq 10.0$, and a comonomer content in the range from 1.0 mol.% to 5.0 mol.%, wherein the copolymer is a copolymer of ethylene and a second alpha-olefin, the second alpha olefin being hexene-1 and/or octene-1, (ii) 25.0 wt.% to 99.0 wt.%, based on the weight of the polymer, of a second polyethylene having a melting peak $Tm \geq 131.0°C$ and an $Mw \leq 1.0 \times 10^6$ and (iii) 0 wt.% to 74.0 wt.%, based on the weight of the polymer, of a third polyethylene having an $Mw > 1.0 \times 10^6$;
(2) cooling the extrudate;
(3) stretching the extrudate in at least one planar direction, wherein the stretching is conducted biaxially to a magnification factor in the range of from 9-fold to 49-fold in area, while exposing the extrudate to temperature $\leq (Tm - 10°C)$ wherein Tm is the melting peak of the polyethylene having the lowest melting peak among the polyethylenes used to produce the extrudate;
(4) removing at least a portion of the diluent from the stretched extrudate to form the microporous membrane; and
(5) subjecting the membrane to a thermal treatment step.

**8.** The method of claim 7, wherein the ethylene-alpha olefin copolymer's melting peak Tm is in the range of 122.0°C to 126.0°C, the ethylene-alpha olefin copolymers's Mw is in the range of $1.0 \times 10^4$ to $1.0 \times 10^5$, and the first ethylene-alpha olefin copolymers's MWD is in the range of 2.5 to 4.5.

**9.** The method of claim 7 or 8, further comprising stretching the membrane in at least one planar direction following step (3).

**10.** The method of any one of claims 7 to 9, further comprising removing any remaining volatile species from the membrane after step (3).

**11.** A battery comprising an electrolyte, an anode, a cathode, and a separator according to claim 6 situated between the anode and the cathode.

**12.** The battery of claim 11, wherein the battery is a lithium ion secondary battery, a lithium-polymer secondary battery, a nickel-hydrogen secondary battery, a nickel-cadmium secondary battery, a nickel-zinc secondary battery, or a silver-zinc secondary battery.

**13.** The battery of claim 12, wherein the cathode comprises a current collector, and a cathodic active material layer on the current collector capable of absorbing and discharging lithium ions.

**14.** The battery of claim 13, wherein the electrolyte comprises lithium salts in an organic solvent.

**Patentansprüche**

**1.** Mikroporöse Membran, umfassend:

(i) 1,0 Gew.-% bis 20,0 Gew.-%, bezogen auf das Gewicht der Membran, eines Ethylen-$\alpha$-Olefin-Copolymers mit einem Schmelzpeak $Tm \leq 130,0\,°C$, einem $Mw \leq 9,0 \times 10^5$, einer $MWD \leq 10,0$ und einem Comonomergehalt im Bereich von 1,0 bis 5,0 Mol-%; wobei das Copolymer ein Copolymer von Ethylen mit einem zweiten $\alpha$-Olefin ist, wobei das zweite $\alpha$-Olefin Hexen-1 und/oder Octen-1 ist;
(ii) 25,0 Gew.-% bis 99,0 Gew.-%, bezogen auf das Gewicht der Membran, eines zweiten Polyethylens mit einem Schmelzpeak $Tm \geq 131,0\,°C$ und einem $Mw \leq 1 \times 10^6$; und
(iii) 0 Gew.-% bis 74,0 Gew.-%, bezogen auf das Gewicht der Membran, eines dritten Polyethylens mit einem $Mw > 1,0 \times 10^6$;

wobei:
die Membran eine Abriegeltemperatur von $\leq 130,5\,°C$ und eine Abriegel-Aktivierungsenergie $E2 \geq 3,5 \times 10^3$ J/mol aufweist, wobei die Abriegeltemperatur und die Abriegel-Aktivierungsenergie gemäß den in der Beschreibung dargelegten Verfahren gemessen werden und die Tm gemäß JIS K7122 gemessen wird.

2. Mikroporöse Membran nach Anspruch 2, wobei die Membran Ethylen-$\alpha$-Olefin-Copolymer in einer Menge im Bereich von 8,0 bis 13,0 Gew.-%, bezogen auf das Gewicht der Membran, umfasst.

3. Mikroporöse Membran nach Anspruch 1 oder 2, wobei das Ethylen-$\alpha$-Olefin-Copolymer einen Schmelzpeak Tm im Bereich von 122,0 °C bis 126,0 °C aufweist.

4. Mikroporöse Membran nach einem der Ansprüche 1 bis 3, wobei das Ethylen-$\alpha$-Olefin-Copolymer ein Mw im Bereich von 1,0 x 10$^4$ bis 1,0 x 10$^5$ aufweist.

5. Mikroporöse Membran nach einem der Ansprüche 1 bis 4, wobei das Ethylen-$\alpha$-Olefin-Copolymer eine MWD im Bereich von 2,5 bis 4,5 aufweist.

6. Batterieseparatorfolie, die eine mikroporöse Membran nach einem der vorangegangenen Ansprüche umfasst.

7. Verfahren zur Herstellung einer mikroporösen Membran, umfassend:

   (1) das Extrudieren eines Gemischs aus Verdünnungsmittel und Polymer, wobei das Polymer (i) 1,0 Gew.-% bis 20,0 Gew.-%, bezogen auf das Gewicht der Membran, eines Ethylen-$\alpha$-Olefin-Copolymers mit einem Schmelzpeak Tm $\leq$ 130,0 °C, einem Mw $\leq$ 9,0 x 10$^5$, einer MWD $\leq$ 10,0 und einem Comonomergehalt im Bereich von 1,0 bis 5,0 mol.-% umfasst, wobei das Copolymer ein Copolymer von Ethylen mit einem zweiten $\alpha$-Olefin ist, wobei das zweite $\alpha$-Olefin Hexen-1 und/oder Octen-1 ist; (ii) 25,0 Gew.-% bis 99,0 Gew.-%, bezogen auf das Gewicht der Membran, eines zweiten Polyethylens mit einer Schmelzpeak-Tm $\geq$ 131,0 °C und einem Mw $\leq$ 1 x 10$^6$; und (iii) 0 Gew.-% bis 74,0 Gew.-%, bezogen auf das Gewicht der Membran, eines dritten Polyethylens mit einem Mw > 1,0 x 10$^6$. umfasst;
   (2) das Kühlen des Extrudats;
   (3) das Recken des Extrudats in zumindest einer planaren Richtung, wobei das Recken biaxial zu einem Vergrößerungsfaktor im Bereich von der 9fachen bis zur 49fachen Fläche durchgeführt wird, während das Extrudat einer Temperatur $\leq$ (Tm - 10 °C) ausgesetzt wird, wobei Tm der Schmelzpeak des Polyethylens mit dem niedrigsten Schmelzpeak unter den Polyethylenen, die zur Herstellung des Extrudats verwendet wurden, ist;
   (4) das Entfernen zumindest eines Teils des Verdünnungsmittels aus dem gereckten Extrudat, um die mikroporöse Membran zu bilden; und
   (5) das Unterziehen der Membran einem Wärmebehandlungsschritt.

8. Verfahren nach Anspruch 7, wobei der Schmelzpeak Tm des Ethylen-$\alpha$-Olefin-Copolymers im Bereich von 122,0 °C bis 126,0 °C liegt, das Mw des Ethylen-$\alpha$-Olefin-Copolymers im Bereich von 1,0 x 10$^4$ bis 1,0 x 10$^5$ liegt und die MWD des Ethylen-$\alpha$-Olefin-Copolymers im Bereich von 2,5 bis 4,5 liegt.

9. Verfahren nach Anspruch 7 oder 8, das weiters nach Schritt (3) das Recken der Membran in zumindest einer planaren Richtung umfasst.

10. Verfahren nach einem der Ansprüche 7 bis 9, das weiters nach Schritt (3) das Entfernen jeglicher verbliebener flüchtiger Spezies aus der Membran umfasst.

11. Batterie, die einen Elektrolyten, eine Anode, eine Kathode und einen Separator nach Anspruch 6, der zwischen der Anode und der Kathode angeordnet ist, umfasst.

12. Batterie nach Anspruch 11, wobei die Batterie eine Lithiumionen-Sekundärbatterie, eine Lithium-Polymer-Sekundärbatterie, eine Nickel-Wasserstoff-Sekundärbatterie, eine Nickel-Cadmium-Sekundärbatterie, eine Nickel-Zink-Sekundärbatterie oder eine Silber-Zink-Sekundärbatterie ist.

13. Batterie nach Anspruch 12, wobei die Kathode einen Stromabnehmer und auf dem Stromabnehmer eine Schicht aus aktivem Kathodenmaterial umfasst, die in der Lage ist, Lithiumionen zu absorbieren und abzugeben.

14. Batterie nach Anspruch 13, wobei der Elektrolyt Lithiumsalze in einem organischen Lösungsmittel umfasst.

**Revendications**

1. Membrane microporeuse comprenant :

   (i) 1,0 % en poids à 20,0 % en poids, par rapport au poids de la membrane, d'un copolymère d'éthylène-alpha-oléfine ayant un pic de fusion Tm ≤ 130,0°C, une Mw < 9,0 x $10^5$, une MWD ≤ 10,0, et une teneur en comonomère située dans la plage allant de 1,0 à 5,0 % en moles, lequel copolymère est un copolymère d'éthylène et d'une deuxième alpha-oléfine, la deuxième alpha-oléfine étant l'hexène-1 et/ou l'octène-1 ;
   (ii) 25,0 % en poids à 99,0 % en poids, par rapport au poids de la membrane, d'un deuxième polyéthylène ayant un pic de fusion Tm ≥ 131,0°C et une Mw < 1 x $10^6$ ; et
   (iii) 0 % en poids à 74,0 % en poids, par rapport au poids de la membrane, d'un troisième polyéthylène ayant une Mw > 1,0 x $10^6$ ;

   dans laquelle :
   la membrane a une température de coupure ≤ 130,5°C et une énergie d'activation de coupure E2 ≥ 3,5 x $10^3$ J/mol, dans laquelle la température de coupure et l'énergie d'activation de coupure sont mesurées conformément aux procédés indiqués dans la description, et le Tm est mesuré conformément à la norme JIS K7122.

2. Membrane microporeuse selon la revendication 1, laquelle membrane comprend le copolymère d'éthylène-alpha-oléfine en une quantité située dans la plage allant de 8,0 à 13,0 % en poids par rapport au poids de la membrane.

3. Membrane microporeuse selon la revendication 1 ou 2, dans laquelle le copolymère d'éthylène-alpha-oléfine a un pic de fusion Tm situé dans la plage allant de 122,0°C à 126,0°C.

4. Membrane microporeuse selon l'une quelconque des revendications 1 à 3, dans laquelle le copolymère d'éthylène-alpha-oléfine a une Mw située dans la plage allant de 1,0 x $10^4$ à 1,0 x $10^5$.

5. Membrane microporeuse selon l'une quelconque des revendications 1 à 4, dans laquelle le copolymère d'éthylène-alpha-oléfine a une MWD située dans la plage allant de 2,5 à 4,5.

6. Film séparateur de batterie comprenant la membrane microporeuse de l'une quelconque des revendications précédentes.

7. Procédé pour produire une membrane microporeuse, comprenant :

   (1) l'extrusion d'un mélange de diluant et de polymère, le polymère comprenant (i) 1,0 % en poids à 20,0 % en poids, par rapport au poids du polymère, d'un copolymère d'éthylène-alpha-oléfine ayant un pic de fusion Tm ≤ 130,0°C, une Mw ≤ 9,0 x $10^5$, une MWD ≤ 10,0, et une teneur en comonomère située dans la plage allant de 1,0 % en moles à 5,0 % en moles, lequel copolymère est un copolymère d'éthylène et d'une deuxième alpha-oléfine, la deuxième alpha-oléfine étant l'hexène-1 et/ou l'octène-1, (ii) 25,0 % en poids à 99,0 % en poids, par rapport au poids du polymère, d'un deuxième polyéthylène ayant un pic de fusion Tm ≥ 131,0°C et une Mw ≤ 1,0 x $10^6$, et (iii) 0 % en poids à 74 % en poids, par rapport au poids du polymère, d'un troisième polyéthylène ayant une Mw > 1,0 x $10^6$ ;
   (2) le refroidissement de l'extrudat ;
   (3) l'étirage de l'extrudat dans au moins une direction du plan, lequel étirage est effectué biaxialement jusqu'à un facteur d'agrandissement situé dans la plage allant de 9 fois à 49 fois en surface, cependant que l'extrudat est exposé à une température ≤ (Tm - 10°C) où Tm est le pic de fusion du polyéthylène ayant le plus bas pic de fusion parmi les polyéthylènes utilisés pour produire l'extrudat ;
   (4) l'élimination d'au moins une partie du diluant dans l'extrudat étiré pour former la membrane microporeuse ; et
   (5) la soumission de la membrane à une étape de traitement thermique.

8. Procédé selon la revendication 7, dans lequel le pic de fusion Tm du copolymère d'éthylène-alpha-oléfine est situé dans la plage allant de 122,0°C à 126,0°C, la Mw du copolymère d'éthylène-alpha-oléfine est située dans la plage allant de 1,0 x $10^4$ à 1,0 x $10^5$, et la MWD du premier copolymère d'éthylène-alpha-oléfine est située dans la plage allant de 2,5 à 4,5.

9. Procédé selon la revendication 7 ou 8, comprenant en outre l'étirage de la membrane dans au moins une direction du plan après l'étape (3).

**10.** Procédé selon l'une quelconque des revendications 7 à 9, comprenant en outre l'élimination de toute espèce volatile résiduelle dans la membrane après l'étape (3).

**11.** Batterie comprenant un électrolyte, une anode, une cathode, et un séparateur selon la revendication 6 situé entre l'anode et la cathode.

**12.** Batterie selon la revendication 11, laquelle batterie est une batterie rechargeable au lithium-ion, une batterie rechargeable au lithium-polymère, une batterie rechargeable au nickel-hydrogène, une batterie rechargeable au nickel-cadmium, une batterie rechargeable au nickel-zinc, ou une batterie rechargeable à l'argent-zinc.

**13.** Batterie selon la revendication 12, dans laquelle la cathode comprend un collecteur de courant, et une couche de matériau actif de cathode sur le collecteur de courant capable d'absorber et de décharger des ions lithium.

**14.** Batterie selon la revendication 13, dans laquelle l'électrolyte comprend des sels de lithium dans un solvant organique.

Fig. 1

Fig. 2

A

B

# Fig. 3

**Example 1-3**

**Example 4-5**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2008026782 A
- EP 1947138 A
- JP 2002128943 A
- JP 2002128942 A
- WO 96027633 A
- JP 11269289 A
- WO 2007132942 A
- WO 2008016174 A
- US 5084534 A
- WO 199723554 A
- WO 2008016174 PCT
- WO 2007132942 PCT
- WO 2007052663 A

**Non-patent literature cited in the description**

- *Macromolecules,* 2001, vol. 34 (19), 6812-6820